# EUROPEAN PATENT APPLICATION

(11) **EP 0 732 240 A1**
(43) Date of publication of application: **18.09.1996**
(21) Application number: 96200652.4
(22) Date of filing: 09.03.1996
(51) Int. Cl.: B60R 21/20

(54) **Air bag device for a motor vehicle steering wheel**

(30) Priority: 16.03.1995 IT MI950503
(71) Applicant: MOMO S.P.A., I-20138 Milano (IT)
(72) Inventor: Cattaneo, Marco, 27100 Pavia (IT)
(74) Representative: Mittler, Enrico

(57) **Abstract**

The device comprises an explosive charge (2) and an inflatable balloon (17) placed inside a container consisting of a bottom part (1) and of a cover (3) connected together by a breakable band (13) with an intermediate rupture line (14, 15).

## Description

The present invention relates to an air bag device for a motor vehicle steering wheel.

Air bag devices for the protection of the chest of the driver of a motor vehicle in case of a violent impact against an obstacle are well known.

Essentially it's a case of a prefabricated module applied to the central part of the steering wheel, that contains an explosive charge that inflates on impact to cause the rupture of an external container and the inflation of a balloon or bag that is interposed between the driver and the steering wheel in front.

A problem originated by the increasingly widespread use of air bag devices is represented by the need of making them as suitable as possible for the application to a quantity of steering wheels of different shapes.

The object of the present invention is in fact that of providing an air bag device that is readily adaptable to steering wheels of different shapes and dimensions.

According to the invention such object is attained with a device comprising an explosive charge and an inflatable balloon placed inside a container provided with a rupture line, characterized in that said container consists of a bottom part and of a cover connected together by a breakable band with an intermediate rupture line.

This conformation of the device according to the invention allows the cover and the bottom to be made as two distinct parts, that are joined together by a third structural part that in case of impact and consequent explosion is destined to rupture to allow the balloon to inflate and thus to carry out the protective function for which it is designed.

As a consequence, the cover can be selected in a manner independent of the rest of the module, that can thus be adapted to steering wheels having the most diverse shapes and dimensions.

In addition an appropriate and independent selection of the breakable connecting band is thus possible, that can be of the most suitable material and thickness to allow a stable and safe connection under normal traveling conditions and an equally safe rupture when the sudden intervention of the safety device is required.

These and other features of the present invention will be made more evident by the following detailed description of an embodiment thereof illustrated as an example in the enclosed drawings, wherein:
Fig. 1 shows a device according to the invention in a top plan view;
Fig. 2 shows the abovementioned device in a cross-sectional view taken along the line II-II of Fig. 1;
Fig. 3 shows the above mentioned device in a cross-sectional view taken along the line III-III of Fig. 1;
Fig. 4 shows the above mentioned device in a cross-sectional view taken along the line IV-IV of Fig. 1, without the inflatable balloon for reasons of clarity.

The air bag device illustrated in the drawings comprises a bottom 1, generally made of metal, wherein an explosive charge 2 is housed suitable for exploding in case of a violent impact, and a cover 3 of any shape and material according to the type of steering wheel to which the device is destined.

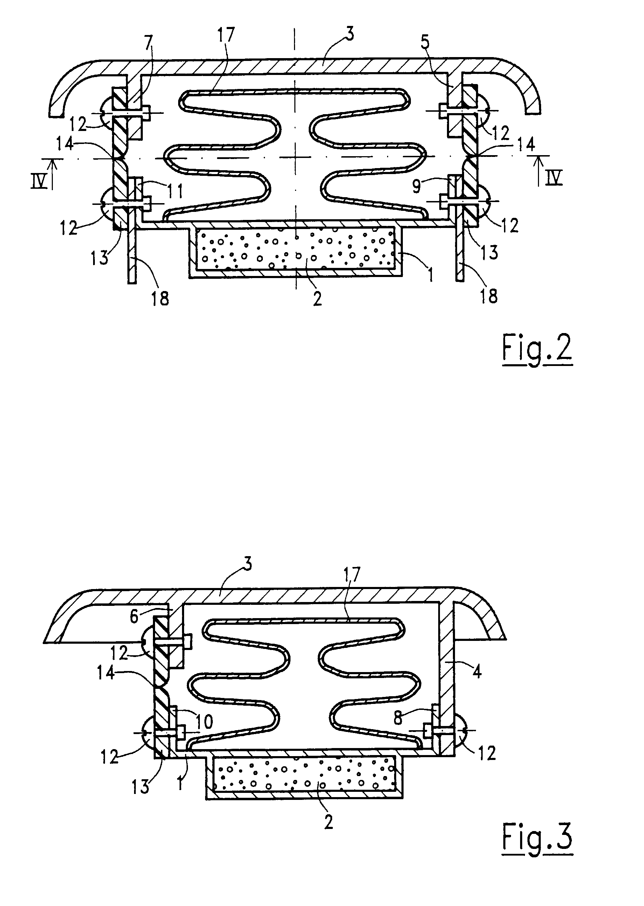

From the cover 3 four ribs 4, 5, 6 and 7 extend downward, the first of which has a greater vertical extension with respect to the other three (Figs. 2 and 3), in turn as an example but not compulsorily connected together (Fig. 4).

The bottom 1 in turn has four peripheral edges 8, 9, 10 and 11, turned upward, the first of which is fastened directly to the rib 4 having the greater height of the cover 3 by means of a rivet 12 (Fig. 3), while the other three are connected to the ribs 5, 6 and 7 having a smaller height of the same cover through a connecting band 13, that has the same shape as the peripheral edges 9-11 and of the ribs 5-7 and is fastened to said edges and to said ribs by means of two sets of rivets 12, so as to make a connection on three adjacent sides (Fig. 2).

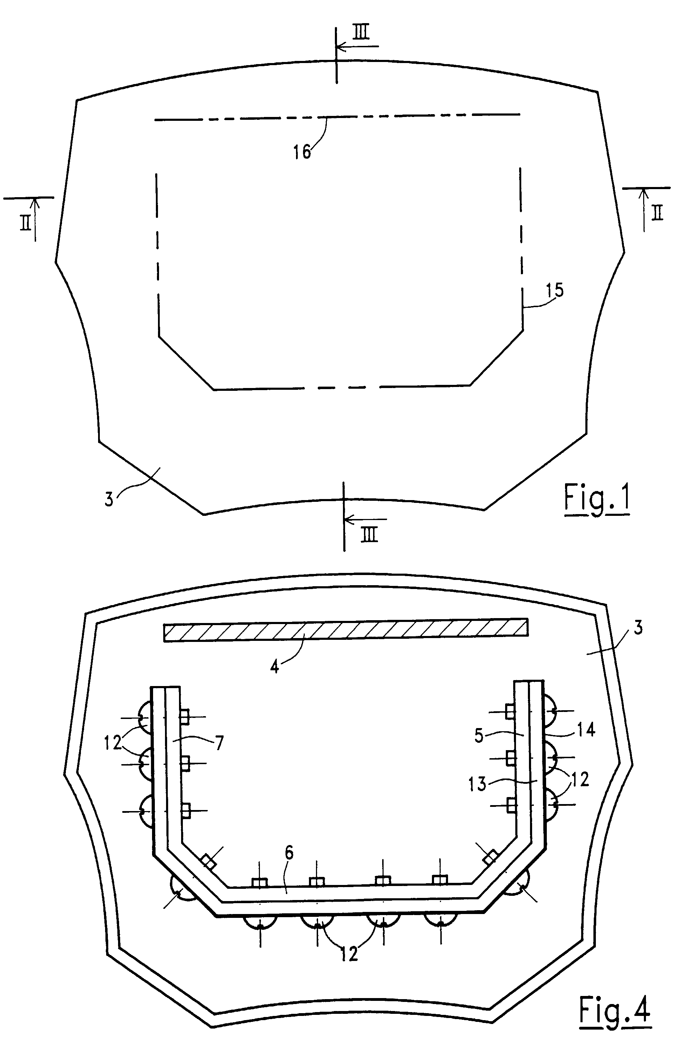

The band 13 is made of a material that is easily broken, for example thermoplastic or polyurethane material, and it has an intermediate area with a very reduced thickness 14 (Figs. 2 and 3), that defines a corresponding line of rupture 15 (Fig. 1) suitable for facilitating the turning the cover 3 over by rotation round the hinge line 16 (Fig. 1) defined by the rib 4 in case of bursting of the explosive charge 2.

Inside the container formed by the bottom 1 and by the cover 3 there is housed an inflatable balloon or bag 17, that is fastened to the bottom 1 and is capable of receiving the explosive charge 2 when it bursts and thus to inflate while at the same time causing the rupture of the breakable band 13 and the cover 3 to turn over.

Lastly two small brackets 18 (Fig. 2) are provided and fastened between the band 13 and the edges 9 and 11 of the bottom 2, that allow the device to be fastened in a central cavity of the steering wheel to which it is destined.

## Claims

1. An air bag device for a motor vehicle steering wheel, comprising an explosive charge (2) and an inflatable balloon (17) placed inside a container provided with a rupture line, characterized in that said container consists of a bottom part (1) and of a cover (3) connected together by a breakable band (13) with an intermediate rupture line (14, 15).

2. A device according to claim 1, characterized in that said connecting band (13) extends along three adjacent sides of the container (1, 3), while along a fourth side the bottom (1) is connected directly to the cover (3) along a fastening line (16) that acts as a hinge for turning the cover (3) over when the explosive charge (2) bursts and the balloon (17) is inflated.
